(19) Europäisches Patentamt
European Patent Office
Office européen des brevets

(11) **EP 3 748 551 A1**

(12) **EUROPÄISCHE PATENTANMELDUNG**

(43) Veröffentlichungstag:
**09.12.2020   Patentblatt 2020/50**

(51) Int Cl.:
**G06N 3/08** *(2006.01)*    **G06N 5/00** *(2006.01)*
**G06N 7/00** *(2006.01)*

(21) Anmeldenummer: **19179116.9**

(22) Anmeldetag: **07.06.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Robert Bosch GmbH**
**70442 Stuttgart (DE)**

(72) Erfinder:
• **Lindauer, Marius**
  **79199 Kirchzarten (DE)**
• **Hutter, Frank**
  **79110 Freiburg (DE)**
• **Biedenkapp, Andre**
  **79106 Freiburg im Breisgau (DE)**
• **Bozkurt, Furkan**
  **10965 Berlin (DE)**

(54) **VERFAHREN, VORRICHTUNG UND COMPUTERPROGRAMM ZUM EINSTELLEN EINES HYPERPARAMETERS**

(57)    Die Erfindung betrifft ein Verfahren zum Einstellen eines Hyperparameters $h$ eines Optimierungsalgorithmus (11), der ein Optimierungsproblem löst und der Optimierungsalgorithmus (11) anhand des Hyperparameters $h$ parametrisiert ist. Abhängig von einem erfassten Zustand (engl. state) wird mittels einer vorgegebenen Strategie (engl. policy, $\Pi$) ein Wert (engl. action, $a$) vorgeschlagen. Ein Wert $v$ des Hyperparameters $h$ wird abhängig von dem Wert $a$ der vorgegebenen Strategie $\Pi$ angepasst. Die Erfindung betrifft ferner ein Computerprogramm und eine Vorrichtung zum Ausführen des Verfahrens und ein maschinenlesbares Speicherelement (12), auf dem das Computerprogramm gespeichert ist.

Fig. 1

Printed by Jouve, 75001 PARIS (FR)

**Beschreibung**

Technisches Gebiet

Die Erfindung betrifft ein Verfahren zum Einstellen eines Hyperparameters eines Optimierers. Ebenso betrifft die Erfindung eine Vorrichtung und ein Computerprogramm, die jeweils eingerichtet sind, das Verfahren auszuführen.

Stand der Technik

Die Autoren T. Elsken, J. Metzen, und F. Hutter geben in ihrer Veröffentlichung "Neural architecture search: A survey." arXiv preprint arXiv:1808.05377 (2018) einen Überblick über Verfahren zur Optimierung einer Architektur von maschinellen Lernsystemen.

Vorteile der Erfindung

Das Anlernen von maschinellen Lernsystemen ist sehr rechenintensiv und deshalb selbst auf leistungsstarken Rechnern extrem zeitintensiv. Dieses Problem verschärft sich, wenn das maschinelle Lernsystem viele Parameter (z.B. <100 bis >1Mio. Parameter) aufweist und viele Trainingsdaten beim Anlernen benötigt werden, da diese beim Anlernen jeweils durch das maschinelle Lernsystem verarbeitet werden müssen. Ein Hyperparameter des Anlernverfahrens kann durch Ausprobieren angepasst werden, um die Lernkurve positiv zu beeinflussen. Das Ausprobieren ist jedoch extrem ineffizient, da hierfür jedes Mal alle Berechnungen durchgeführt werden müssen, ohne vorhersehen zu können, ob dieser angepasste Hyperparameter des Anlernverfahrens anschließend zu einer besseren Lernkurve führt.
Die Erfindung hat zum Ziel, den Anlernprozess von maschinellen Lernsystemen zu vereinfachen, indem gezielt ein geeigneter Wert des Hyperparameters des Anlernverfahrens bestimmt wird, sodass insgesamt weniger Anlernschritte benötigt werden, wodurch das Anlernverfahren computerressourcen-effizienter wird.
Es wird vorgeschlagen, dass anhand einer Strategie (engl. policy) ein optimaler Wert des Hyperparameters oder Werte einer Mehrzahl von Hyperparametern eingestellt wird. Die Strategie (engl. policy) kann durch ein bestärkendes Lernen (engl. reinforcement learning) ermittelt werden. Dies ermöglicht es, präziser ein Optimum der Kostenfunktion beim Anlernen zu finden und damit eine höhere Leistungsfähigkeit des maschinellen Lernsystems zu erreichen.
Mit der Strategie kann dynamisch der Hyperparameter des Lernverfahrens beim Anlernen des maschinellen Lernsystems angepasst werden, um schneller und damit computerressourcen-sparsamer das maschinelle Lernsystem anzulernen, ohne unnötig viele, nicht-zielführende Werte des Hyperparameters zu verwenden, insbesondere zu testen.
Ferner erlaubt die Erfindung auch einen optimalen Hyperparameter des Anlernverfahrens zu finden, welches schlussendlich weniger Fehleranfällig wird, da nicht mehr manuell der Hyperparameter eingestellt wird.

Offenbarung der Erfindung

In einem ersten Aspekt wird ein, insbesondere computerimplementiertes, Verfahren zum Einstellen eines Hyperparameters $h$ eines Computerprogramms oder eines computerimplementierten Optimierungsalgorithmus vorgeschlagen. Das Computerprogramm ist eingerichtet, mittels des Optimierungsalgorithmus ein Optimierungsproblem zu lösen. Der Optimierungsalgorithmus ist anhand des Hyperparameters $h$ parametrisiert. Abhängig von einem erfassten Zustand (engl. state) des Computerprogramms oder des Optimierungsalgorithmus wird mittels einer vorgegebenen Strategie (engl. policy, $\Pi$) ein Wert (engl. action, $a$) vorgeschlagen, insbesondere ermittelt. Der Wert $a$ kann auch eine Konfiguration des Hyperparameters charakterisieren. Alternativ kann der Zustand auch abhängig von dem Optimierungsalgorithmus erfasst werden. Der Zustand kann den Optimierungsalgorithmus oder das Computerprogramm charakterisieren, inwieweit diese jeweils das Optimierungsproblem gelöst haben. Ein Wert $v$ des Hyperparameters $h$ wird abhängig von dem vorgeschlagenen Wert $a$ der vorgegebenen Strategie angepasst. Unter dem Hyperparameter kann mindestens ein Parameter des Optimierungsalgorithmus verstanden werden, der den Optimierungsalgorithmus charakterisiert. Der Wert des Hyperparameters ist üblicherweise für zumindest einen Iterationsschritt des Optimierungsalgorithmus fix.
Folgendes kann unter einem Optimierungsproblem verstanden werden: Bei einem (mathematischen) Optimierungsproblem ist ein Lösungsraum $\Omega$ (Menge von möglichen Lösungen) und eine Ziel-/Bewertungs-funktion $f$ gegeben. Gesucht ist eine Lösung $x \in \Omega$ mit möglichst großem oder kleinstem Wert $f(x)$, oder eine Aussagen über die Werte der Lösungen. Ferner kann es sich bei dem Optimierungsproblem darum drehen, eine optimale Parametrisierung der Zielfunktion hinsichtlich einer Nebenbedingung zu ermitteln. Der Optimierungsalgorithmus wird verwendet, um eine optimale Lösung des Optimierungsproblems zu ermitteln. Aufgrund der Komplexität kann der Optimierungsalgorithmus näherungsweise und/oder iterativ eine optimale Lösung ermitteln.
Beim Aufrufen oder Starten des Computerprogramms kann der Optimierungsalgorithmus gestartet werden. Der Optimierungsalgorithmus ermittelt gegeben einer Eingangsgröße, die ein Optimierungsproblem charakterisiert, eine Lösung des Optimierungsproblems. Der Optimierungsalgorithmus oder das Computerprogramm kann eine Ausgangsgröße ausgeben. Diese Ausgangsgröße charakterisiert eine Lösung des Optimierungsproblems, welches durch die Eingangsgröße charakterisiert wird. Vorzugsweise löst der Optimierungsalgorithmus iterativ das Optimierungsproblem, da aufgrund der Komplexität vorzugsweise numerische Verfahren eingesetzt werden. Dabei führt der Optimierungsalgorithmus zu jeweils einem Zeitschritt einer Abfolge von Zeitschritten jeweils einen Iterationsschritt aus. Dadurch nähert sich die ermittelte (partielle) Lösung der Iterationsschritte sukzessive der optimalen Lösung. Bei jedem Iterationsschritt wird dann eine Lösung, insbesondere die Ausgangsgröße, ausgegeben, wobei die Lösung unter Verwendung des Hyperparameters ermittelt wird. Der Hyperparameter kann den Optimierungsalgorithmus konfigurieren und beeinflusst dadurch ein Verhalten des Optimierungsalgorithmus. Das Verhalten kann ein Konvergenzverhalten sein.

Die Strategie ist eine Regel, durch welche abhängig von dem Zustand vorgeschlagen wird, welche Aktion idealerweise durchgeführt werden soll. Im Folgenden soll die Aktion der vorgeschlagene Wert $a$ sein, abhängig von dem der Hyperparameter $h$ angepasst wird. Die Strategie $\Pi(s)$ kann eine deterministische/stochastische Abbildung des Zustandes s auf den Wert $a$ sein.

Die Strategie kann hierbei derart eingerichtet sein, dass anhand der Strategie ein Ziel, zum Beispiel ein Erreichen einer optimalen Lösung des Optimierungsproblems innerhalb eines vorgebbaren Budget von Computerressourcen, erreicht wird. Die Strategie kann ferner derart eingerichtet sein, dass eine Belohnung (engl. reward) optimiert wird, um das Ziel zu erreichen.

Die Strategie kann bspw. eine LookUp-Table sein, in der die passenden Werte $a$ für die jeweiligen Zustände s hinterlegt sind. Alternativ kann die Strategie durch ein neuronales Netz implementiert sein, welches abhängig von dem Zustand s den Wert $a$ vorschlägt. Zusätzlich kann das neuronale Netz einen Wert einer Q-Funktion (engl. Q-function) ausgeben.

Der Zustand ist eine Größe die einen internen Zustand des Computerprogramms und/oder Optimierungsalgorithmus charakterisiert. Der Zustand kann z.B. ein Fortschritt des Anlernverfahrens zum jeweiligen betrachteten Iterationsschritt/Zeitschritt sein. Der Fortschritt kann bspw. durch eine Leistungsfähigkeit eines zu optimierenden maschinellen Lernsystem auf einem Validierungsset gegeben sein oder durch eine ausgewertete Kostenfunktion dieses maschinellen Lernsystems auf Trainingsdaten. Der Fortschritt kann jeweils einem Wert einer Kostenfunktion des iterativen Anlernverfahrens entsprechen. Zusätzlich oder alternativ kann der Fortschritt eine Leistungsfähigkeit (engl. performance) des maschinellen Lernsystems auf Trainingsdaten charakterisieren. Unter Trainingsdaten werden alle bereitgestellten Daten verstanden, die jeweils ein Paar aus Eingangsgrößen und zugeordneten Ausgangsgrößen umfassen und zum Anlernen und Evaluieren des ersten maschinellen Lernsystem verwendet werden. Vorzugsweise wird zum Evaluieren der Leistungsfähigkeit ein separater Validierungsdatensatz der Trainingsdaten verwendet.

Zusätzlich oder alternativ, kann der Zustand eine Anzahl durchgeführter Rechenoperationen zwischen mindestens zwei Iterationsschritten des Optimierungsalgorithmus und/oder eine vergangene Zeit zwischen mindestens zwei Iterationsschritten sein und/oder eine Historie die letzten Iterationsschritte. Ferner kann der Zustand eine Anzahl von veränderten Werte in einer partiellen Lösung des Optimierungsalgorithmus und/oder eine Veränderung der Lösung verglichen zu einer vorherigen Lösung und/oder eine Distanz zwischen partiellen Lösungen der Iterationsschritte sein. Zusätzlich oder alternativ, kann der Zustand ein verbrauchtes Budget (z.B. Rechenzeit) sein.

Der Zustand s kann aber auch Informationen über das Optimierungsproblem, das der Optimierungsalgorithmus lösen soll, enthalten, beispielsweise eine Problemgröße (z.B. Anzahl Variablen des Optimierungsproblems).

Der Wert $a$ beschreibt entweder eine Änderung des Wertes $v$ des Hyperparameters oder der Wert $a$ ist ein vorgeschlagener, neuer Wert $v$ des Hyperparameters. Weist das Anlernverfahren mehr als einen Hyperparameter auf, dann werden mehrere Werte $a$ vorgeschlagen.

Der Vorteil dieses Verfahrens zum Einstellen des Hyperparameters $h$ ist, dass die Strategie es erlaubt direkt nach jedem Iterationsschritt des Optimierungsalgorithmus, auf eine einfache Weise einen optimalen Wert $v$ des Hyperparameters $h$ zu ermitteln. Dadurch kann eine Folge von optimalen Hyperparameterwerte eingestellt werden. Dies resultiert in einem schnelleren Lösen des Optimierungsproblems und erlaubt auch komplexere Optimierungsprobleme, wie zum Beispiel Anlernen von maschinellen Lernsystemen für eine Klassifikation, computerressourceneffizient auszuführen. Ein weiterer Vorteil ist, dass dieses Verfahren zu einem "Sample" effizienteren lösen des Optimierungsproblems beiträgt und auch eine bessere Generalisierung beim Anlernen von maschinellen Lernsystem erreicht werden kann.

Weiterhin wird vorgeschlagen, dass der Optimierungsalgorithmus iterativ ausgeführt wird. Nach Beendigung eines Iterationsschrittes des Optimierungsalgorithmus, wird der Zustand des Computerprogrammes erfasst, insbesondere ermittelt. Nachdem der Wert des Hyperparameters angepasst wurde, kann zumindest einer der, insbesondere unmittelbar, nachfolgenden Iterationsschritte des Optimierungsalgorithmus ausgeführt werden.

Weiterhin wird vorgeschlagen, dass die Schritte des Erfassens des Zustands und Anpassen des Wertes des Hyperparameters abhängig von dem Wert der Strategie und anschließende Ausführen des nachfolgenden Iterationsschrittes oder der nachfolgenden Iterationsschritte mehrmals hintereinander ausgeführt werden.

Denkbar ist, dass ein individuelles Anpassen des Wertes des Hyperparameters nach jedem oder nach einer Mehrzahl von Iterationsschritten ausgeführt wird. Vorteilhaft hierbei ist, dass keine feste Hyperparametrisierung für alle Optimierungsschritte verwendet wird. Damit kann eine flexible Konfiguration ermöglicht werden. Dadurch kann präziser ein Optimum des Optimierungsproblems erreicht werden, als mit einer festen Hyperparametrisierung. Ferner kann damit eine schnellere Konvergenz des Optimierungsverfahrens erzielt werden. Daraus folgt, dass z.B. weniger Daten zum Anlernen eines maschinellen Lernsystems benötigt werden. Das besondere an der Strategie ist, dass diese dynamisch zu jedem Zustand des Optimierungsalgorithmus einen optimalen Wert des Hyperparameters ausgeben kann. Das erlaubt ein situationsabhängiges Anpassen und Nachjustieren des Hyperparameters.

Weiterhin wird vorgeschlagen, dass die vorgegebene Strategie abhängig von einer Mehrzahl von unterschiedlichen Instanzen des Optimierungsproblems erstellt, insbesondere optimiert, wurde. Es sei angemerkt, dass die Strategie nach dem zweiten Aspekt der Erfindung erstellt worden sein kann.

Weiterhin wird vorgeschlagen, dass derjenige Wert aus einem vorgebbaren Wertebereich des Hyperparameters, für welchen eine maximale Gesamtbelohnung der Mehrzahl der Gesamtbelohnungen erzielt wird, als Wert $v$ für den Hyperparameter vorgeschlagen wird.

Die Gesamtbelohnung kann durch eine Aktionswert-Funktion (engl. action-value function/Q-function, $Q(s,a)$), und insbesondere auch abhängig von einer Belohnungsfunktion $R(s,a)$, ermittelt werden.

Derjenige Wert, der die maximale Gesamtbelohnung erzielt, kann durch eine "greedy Evaluierung" der Gesamtbelohnung, insbesondere der Aktionswert-Funktion, bestimmt werden.

Die Aktionswert-Funktion ermittelt die Gesamtbelohnung durch ein Rollout beginnend bei dem Zustand s und einem gegebenen Wert des Hyperparameters unter Verwendung der Strategie. Es wird also die Gesamtbelohnung vorhergesagt, insbesondere bei Befolgen der Strategie für die nächsten Iterationsschritte.

Es kann die Strategie über die Instanzen hinweg ausgewertet werden. Es sei angemerkt, dass zum Auswerten der Aktionswert-Funktion für die jeweilige Instanz jeweils eine der jeweiligen Instanz zugeordneten Belohnungsfunktion und ggf. einer zugeordneten Übertragungsfunktion ermittelt wird.

Weiterhin wird vorgeschlagen, dass die Strategie denjenigen Wert aus dem vorgebbaren Wertebereich des Hyperparameters auswählt, für welchen die Aktionswert-Funktion die maximale Gesamtbelohnung für eine der unterschiedlichen Instanzen des Optimierungsproblems ermittelt. Dies erlaubt eine abhängige Auswahl des Wertes $a$ unter Berücksichtigung der Instanzen. Für den Fall, dass bekannt ist, welcher Instanz das aktuell zu lösende Optimierungsproblem am ähnlichsten ist, kann abhängig von der ähnlichsten Instanz der Wert $a$ ausgewählt werden, der zu der max. Gesamtbelohnung für diese Instanz führt.

Vorteilhaft hieran ist, dass eine (engl. per-instance algortihm configuration, PIAC) erzielt werden kann. Für PIAC würde die Strategie immer die gleiche Aktion für alle Zustände zurückgeben, aber möglicherweise unterschiedliche Aktionen bei verschiedenen Instanzen.

Die Aktionswert-Funktion $Q(s,a)$ stellt eine erwartete Gesamtbelohnung (kumulative diskontierte Belohnung) dar, die erzielt wird, wenn der Hyperparameter zu dem aktuellen Zustand das Computerprogramm mit dem vorgeschlagenen Wert $a$ der Strategie angepasst wird und der Hyperparameter danach entsprechend angepasst wird.

Der Vorteil hierbei ist eine Instanz-abhängige Anpassung des Hyperparameters. D.h. es wird berücksichtigt, wie sich die jeweilige Anpassung des Hyperparameters auf den unterschiedlichen Instanzen auswirken würde. Dadurch wird eine Robustheit der Auswahl erhöht, wodurch die Strategie besonders zuverlässig wird.

Weiterhin wird vorgeschlagen, dass die Strategie parallel für eine Mehrzahl von Computerprogrammen zur Anpassung deren Hyperparameter verwendet wird.

Weiterhin wird vorgeschlagen, dass der Optimierungsalgorithmus zum Optimieren einer Parametrisierung eines maschinellen Lernsystems verwendet wird. Der Optimierungsalgorithmus kann ein Anlernverfahren für das maschinelle Lernsystem sein. Das maschinelle Lernsystem für eine (Bild-)Klassifikation verwendet werden und kann ein neuronales Netz sein. Das maschinelle Lernsystem kann min. 10, vorzugsweise min. 50, besonders bevorzugt min. 1000 Parameter umfassen.

Unter einem Optimieren des maschinellen Lernsystems kann ein Anlernen des maschinellen Lernsystems verstanden werden. Beim Anlernen wird eine Kostenfunktion, die eine Differenz zwischen Ausgaben des maschinellen Lernsystems und Trainingsdaten charakterisiert, abhängig von der Parametrisierung des maschinellen Lernsystems optimiert. Bspw. bei Deep Learning kann der Hyperparameter eine Lernrate/Gradientenschrittweite sein. Es kann dadurch eine bessere Generalisierung erreicht werden, da dynamisch der Hyperparameter beim Anlernen des maschinellen Lernsystems angepasst wird. Es sei angemerkt, dass der Optimierungsalgorithmus auch zur Optimierung einer Routen-/Trajektorien-planung verwendet werden kann.

In einem zweiten Aspekt der Erfindung wird ein, insbesondere computerimplementiertes, Verfahren zum Erstellen einer Strategie $\Pi$, die zum Anpassen eines Hyperparameters $h$ eines Optimierungsalgorithmus verwendet wird, vorgeschlagen. Die Strategie kann auch für einen Optimierungsalgorithmus eines Computerprogramms verwendet werden. Das Verfahren umfasst folgende Schritte: Zuerst erfolgt ein Initialisieren der Strategie $\Pi$. Die Strategie ist geeignet, abhängig von einem Zustand s des Optimierungsalgorithmus einen Wert des Hyperparameters $h$ vorzuschlagen. Daraufhin folgt ein Erhalten einer Mehrzahl von initialen Zuständen des Optimierungsalgorithmus und einer Mehrzahl von vorgegebenen Belohnungsfunktionen (engl. reward function), die beide jeweils eine Instanz eines Optimierungsproblems, für welches der Optimierungsalgorithmus zum Lösen eingerichtet ist, zugeordnet sind. Daraufhin folgt ein Optimieren der Strategie. Das Optimieren der Strategie kann derart durchgeführt werden, dass der vorgeschlagene Wert *a* gegeben dem initialen Zustand hinsichtlich einer Gesamtbelohnung für jede der Instanzen zu einer maximalen Gesamtbelohnung führt. Die Gesamtbelohnung wird abhängig von jeweils einem Rollout beginnend bei dem initialen Zustand und jeweils einem unterschiedlichen Wert aus einem vorgebbaren Wertebereich des Hyperparameters, insbesondere unter Verwendung der Strategie ermittelt.

Die erstellte Strategie kann für den ersten Aspekt der Erfindung verwendet werden. Vorzugsweise wird die erstellte Strategie für ein Anlernen von maschinellen Lernsystemen verwendet.

Die Gesamtbelohnungen kann abhängig von zumindest einer Aktionswert-Funktion (engl. action-value function, $Q(s,a)$) ermittelt werden, wobei die Aktionswert-Funktion mindestens abhängig von der Belohnungsfunktion ist, die der jeweiligen Instanz zugeordnet ist. Die Gesamtbelohnung wird jeweils abhängig von einem Rollout beginnend bei dem initialen Zustand der jeweiligen Instanz schrittweise abhängig von der initialisierten Strategie und der jeweiligen vorgegebenen Belohnungsfunktion und optional der Übergangsfunktion (engl. transition function) ermittelt. Die Belohnungsfunktion ermittelt jeweils abhängig von der durch die Strategie ermittelten Aktion und abhängig von dem Zustand eine Belohnung (engl. reward).

Die Übergangsfunktion ermittelt einen nachfolgenden Zustand, welcher abhängig von dem Wert *v* des Hyperparameters und dem aktuellen Zustand nach Ausführen zumindest eines Iterationsschrittes des Optimierungsalgorithmus erreicht wird. Die Übergangsfunktion kann eine Wahrscheinlichkeit ausgeben, die charakterisiert, ob einer der Zustände des Zustandsraums unter Anwenden des gegebenen Wertes des Hyperparameters erreicht wird, gegeben dem aktuellen Zustand. Es wird vorgeschlagen, dass die Übergangsfunktion durch ein bestärkendes Lernen (engl. reinforcement learning) gelernt wird.

Unter einem Rollout kann ein Ausrollen, insbesondere ein Vorhersagen, verstanden werden. Hierfür wird abhängig von den eingenommenen Zuständen und gewählten Aktionen eine Abfolge von nacheinander ausgeführten Aktionen und resultierenden Zuständen vorhergesagt. Die mit jeder Aktion *a* verbundenen Belohnung wird zu der Gesamtbelohnung aufsummiert. Das Rollout kann unter Befolgen der Strategie erfolgen.

Der Optimierungsalgorithmus kann auf jeder der Instanzen angewendet werden, wobei die Instanzen jeweils unterschiedlich konfigurierte Situationen eines Optimierungsalgorithmus sind. Für einen Optimierungsalgorithmus wie ein SATsolver, ist beispielsweise eine Instanz eine Logikformel, die erfüllt werden muss. Beim Training eines neuronalen Netzes wäre eine Instanz ein komplettes Dataset auf dem das neuronale Netz trainiert und evaluiert wird. Für Klassifizierungsprobleme könnte der Zustand dann beispielsweise die Anzahl Klassen, die Anzahl Datenpunkte pro Klasse und die Dimensionalität der Datenpunkte beinhalten. Abhängig von der Strategie kann hier z.B. eine Lernrate gesteuert werden.

Es sei angemerkt, dass die Strategie die unter Verwendung einer der Instanzen (vollständig) optimiert werden kann. Die Optimierung kann derart erfolgen, dass die Strategie eine Aktion *a* ausgibt, sodass die max. Gesamtbelohnung erreicht wird, insbesondere wenn der Hyperparameter abhängig von dieser Aktion *a* angepasst wird.

Es sei angemerkt, dass zusätzlich eine vorgegebene Übergangsfunktion (engl. transition function) verwendet werden kann. Das Rollout kann zusätzlich abhängig von der vorgegebenen Übertragungsfunktion ermittelt werden, wobei beim Rollout die Übertragungsfunktion abhängig von dem Zustand und der ermittelten Größe der Strategie einen nachfolgenden Zustand vorhersagt, der dann wiederum verwendet wird, um anhand der Strategie die Größe zu ermitteln, usw.

Es sei angemerkt, dass der Schritt des Optimierens der Strategie mehrmals hintereinander ausgeführt werden kann, vorzugsweise auch beginnend von unterschiedlichen initialen Zuständen, bis eine verwendbare Strategie vorliegt.

Die Belohnung ist eine Größe die charakterisiert in wie weit der gewählte Wert *a* zielführend war. Ein Ziel des Optimierungsalgorithmus kann eine Zeit bis zum Lösen des Problems oder eine Genauigkeit der Lösung des Problems und/oder eine Qualität der Lösung und/oder eine Distanz zu einem Ziel sein. Der Vorteil dieser unterschiedlichen Belohnungen ist, dass diese sich zu jedem Zeitpunkt des Optimierungsalgorithmus, wie einem Anlernverfahren, bestimmen lassen, wodurch das Erlernen der Strategie beschleunigt werden kann.

Zusätzlich oder alternativ kann die Belohnung die negative benötigte Rechenzeit zwischen zwei Iterationsschritte des Optimierungsalgorithmus sein. Eine solche Belohnung würde zu einer minimalen gesamten Laufzeit des Optimierungsalgorithmus führen. Ferner kann die Belohnung abhängig von partiellen Lösungen des iterativen Optimierungsalgorithmus ermittelt werden. Für den Fall, dass der Optimierungsalgorithmus ein SAT solver ist, kann die Belohnung abhängig von einem Prozentsatz der bereits erfüllten Formel des SAT ermittelt werden. Für den Fall, dass der Optimierungsalgorithmus eine Funktion f abhängig von einem Wert x optimiert, und zu jedem Iterationsschritt einen neuen Wert x vorschlägt, kann die Belohnung abhängig von f(x) sein.

Weiterhin wird vorgeschlagen, dass die Strategie mittels bestärkenden Lernens (engl. reinforcement learning) erlernt wird. Der Vorteil hierbei ist, dass automatisiert und mit möglichst wenigen Iterationen bei einem Explorieren die Strategie erlernt werden kann.

Weiterhin wird vorgeschlagen, dass der Zustandsraum und der Wertebereich des Hyperparameters über die Instanzen hinweg gleich sind, aber unterschiedliche Belohnungsfunktion und/oder Übergangsfunktion den unterschiedlichen Instanzen zugeordnet sind. Der Vorteil hierbei ist, dass besser über mehrere Instanzen hinweg die Strategie gelernt werden kann. Folglich auch eine bessere Generalisierung erreicht und aus komplexeren Sequenzen eine Strategie erlernt werden kann. Denkbar ist auch, dass die Strategie parallel für mehrere Optimierungsalgorithmen zu verwendet, da die Strategie nicht abhängig von vorherigen Werte des Hyperparameters oder Zuständen des jeweiligen Optimierungsalgorithmus ist. Vorteilhaft ist auch, dass über heterogene Instanzen hinweg die Strategie gelernt werden kann.

Vorzugsweise wird der Zustand mit weiteren Informationen angereichert, z.B. mit "instance features", wie einer Größe, die charakterisiert, wie komplex das Optimierungsproblem ist. Denn je besser der Fortschritt charakterisiert wird, desto schneller kann die Strategie erlernt werden, aber auch anschließend können mittels der gelernten Strategie bessere Werte $a$ vorhersagt werden.

Denkbar ist, dass die Belohnung unabhängig von der Instanz ist, z.B. ein negativer Reward für jeden unternommenen Schritt. Dadurch kann eine Strategie gelernt werden, welche das Problem mit einer minimalen Rechenzeit (engl. runtime) löst.

Weiterhin wird vorgeschlagen, dass einer Mehrzahl unterschiedlicher Instanzen des Optimierungsproblems, für welches der Optimierungsalgorithmus zum Lösen eingerichtet ist, bereitgestellt werden. Daraufhin kann ein Explorieren eines Zustandsraumes jeder der Instanzen, insbesondere unter Berücksichtigung eines vorgegebenen Wertebereichs des Hyperparameters erfolgen. Beim Explorieren wird erkundet, gegeben einem Zustand des Computerprogrammes oder des Optimierungsalgorithmus unter Verwendung eines möglichen Wertes des Hyperparameters aus dem vorgebbaren Wertebereich des Hyperparameters welcher nachfolgende Zustand des Computerprogrammes oder des Optimierungsalgorithmus erreicht wird. Es wird also der Zustandsraum erforscht. Es kann auch die Belohnungsfunktion und ggf. die Übergangsfunktion abhängig von der Exploration ermittelt werden.

Der Zustandsraum ist eine Menge aller möglichen Zustände, die das Computerprogramm oder Optimierungsalgorithmus annehmen kann. Durch das Explorieren wird beobachtete, welche Aktion zu einem aktuellen Zustand zu welchem nachfolgenden Zustand führt.

In einem weiteren Aspekt der Erfindung wird vorgeschlagen, dass der Optimierungsalgorithmus ein maschinelles Lernsystem optimiert, sodass bspw. dieses maschinelle Lernsystem zum Steuern eines Aktors verwendet werden kann. Alternativ kann dieses maschinelle Lernsystem eine Steuergröße kann zum Steuern eines Aktors eines technischen Systems ermitteln. Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein.

Die Eingangsgröße dieses maschinellen Lernsystem kann bspw. abhängig von erfassten Sensordaten, die dem maschinellen Lernsystem bereitgestellt werden, ermittelt werden. Die Sensordaten können von einem Sensor, wie z.B. einer Kamera, des technischen Systems erfasst oder alternativ von extern empfangen werden.

In einem weiteren Aspekt wird ein Computerprogramm vorgeschlagen. Das Computerprogramm ist eingerichtet, eines der vorherigen genannten Verfahren auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist. Des Weiteren wird eine Vorrichtung vorgeschlagen, die eingerichtet ist eines der Verfahren auszuführen.

Ausführungsbeispiele der oben genannten Aspekte sind in den beiliegenden Zeichnungen dargestellt und in der nachfolgenden Beschreibung näher erläutert. Dabei zeigen:

**Kurze Beschreibung der Zeichnungen**

Fig. 1    eine schematische Darstellung eines Reglers, der ein Wert eines Optimierungsalgorithmus anpasst;
Fig. 2    eine schematische Darstellung einer Ausführungsform eines Verfahren zum Anpassen eines Wertes des Optimierungsalgorithmus.

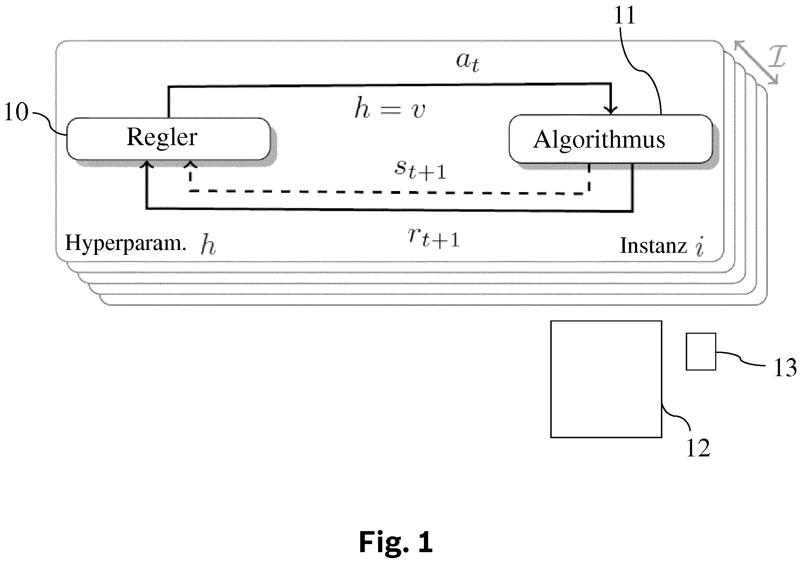

Figur 1 zeigt schematisch einen Regler (10), der eine Strategie $\Pi$ hat, mittels dieser der Regler (10) abhängig von einer Belohnung ($r_{t+1}$) oder/und einem internen Zustand ($s_{t+1}$) eines Optimierungsalgorithmus (11) eine Aktion $a_t$ ermittelt. Die Aktion $a_t$ kann verwendet werden, um einen Wert $a$ vorzuschlagen, um mit dem einen Wert $v$ eines Hyperparameter $h$ des Optimierungsalgorithmus (11) anzupassen. Ferner zeigt Figur 1 eine Mehrzahl von Instanzen $i \in I$. Der Regler (10) kann zu jedem Iterationsschritt $t$ des Optimierungsalgorithmus den Wert $v$ des Hyperparameters $h$ abhängig von dem Wert $a$ anpassen. Basierend auf dem internen Zustand $s_i$, für eine gegebene Instanz $i$, kann der Regler (10), bis eine Instanz gelöst oder ein maximales Budget erreicht wurde, entscheiden, welcher Wert $v$ der Hyperparameter $h$ haben soll. Der Regler (10) kann auf eine Recheneinheit (12) und einen Speicher (13) zugreifen. Der Regler (10) kann in Software als auch in Hardware implementiert sein.

Im Folgenden soll eine Optimierung eines Hyperparameters *h* für einen Optimierungsalgorithmus, wie zum Beispiel ein Anlernverfahren eines maschinellen Lernsystems gezeigt werden. Der Hyperparameter *h* kann beispielsweise eine Gradientenschrittweite (Lernrate) des Anlernverfahrens, wie Deep-Learning, sein. Das Anlernverfahren wird iterativ ausgeführt, d.h. der Schritt des Optimierens einer Kostenfunktion (engl. loss function) wird mehrfach wiederholt, bis ein vorgebbares Abbruchkriterium erreicht wird. Normalerweise wird ein Wert des Hyperparameters *h* zu Beginn des Anlernverfahrens gewählt und immer der gleiche Wert zu jedem Iterationsschritt verwendet.

Jedoch ist es vorteilhaft, wenn der Wert des Hyperparameters *h* dynamisch angepasst werden kann, um bspw. die Kostenfunktion zielgerichteter optimieren zu können. Im nachfolgenden soll gezeigt werden, wie der Wert des Hyperparameters *h* dynamisch angepasst werden kann.

Hierfür kann die Entscheidung, welchen Wert der Hyperparameter *h* annehmen soll, durch ein Markov Decision Process (MDP) beschrieben werden:

$$M := (S, A, T, R) \qquad (1)$$

wobei S ein Zustandsraum, *A* ein Aktionsraum, *T* eine Übergangsfunktion und *R* eine Belohnungsfunktion ist.

Zustandsraum *S*:

Zu jedem Iterationsschritt *t* muss der Regler (10) über den internen Zustand $s_t$ des Optimierungsalgorithmus (Fig.1: Algorithmus) informiert sein, um den Wert des Hyperparameters *h* optimal anpassen zu können. Für das Beispiel, wenn der Optimierungsalgorithmus das Deep-Learning Verfahren ist, kann der interne Zustand *s* eine momentane Leistungsfähigkeit des neuronalen Netzes auf einem Validierungdatensatz charakterisieren. Die Leistungsfähigkeit kann auch bspw. ein Wert der Kostenfunktion sein.

Aktionsraum *A*:

Gegeben dem aktuellen internen Zustand $s_t$ entscheidet der Regler (10), wie der Wert *v* des Hyperparameters *h* geändert werden muss. Der Wert *v* ist ein Wert aus einem vorgebbaren Wertebereich $A_h$ des Hyperparameters *h*. Der Regler (10) kann entweder einen vorgeschlagenen Wert *a* der Strategie Π direkt als Wert *v* dem Hyperparameter *h* zuweisen. Alternativ kann die Strategie Π eine Änderung des Wertes *v* des Hyperparameters vorschlagen. Abhängig von dieser vorgeschlagenen Änderung wird der Wert des Hyperparameters angepasst.

Übergangsfunktion *T*:

Die Übergangsfunktion *T* beschreibt in welchen nachfolgenden internen Zustand $s_{t+1}$ sich der Algorithmus befindet, nachdem der Wert *v* des Hyperparameters *h* angepasst wurde und der Algorithmus mit diesem Hyperparameter einen Iterationsschritt ausgeführt hat. Beispielsweise kann die Übergangsfunktion *T* eine Wahrscheinlichkeit $p(s_{t+1}|a_t, s_t)$ ausgeben. Es sei angemerkt, dass die Übergangsfunktion *T* direkt aus beobachteten Übergängen ermittelt werden kann, wie z.B. bei Verwendung von bestärkendem Lernen (engl. reinforcement learning).

Belohnungsfunktion R:

Dass der Regler (10) lernt, welchen Wert *v* für den Hyperparameter *h* geeignet ist, benötigt der Regler (10) eine Belohnung (engl. reward). Abhängig von dieser Belohnung kann der Regler (10) lernen, welche Werte *v* für den jeweiligen gegebenen Zustand s geeignet sind. Für den Fall, dass der Optimierungsalgorithmus (11) ein Anlernverfahren ist, kann die Belohnung beispielsweise eine Qualität der ermittelten Ausgaben eines neuronalen Netzes sein. Die Belohnungsfunktion *R* kann auch abhängig von einem Zeit-/Energie-Budget berechnet werden.

Aus der Gleichung (1) kann eine Strategie (engl. policy Π) ermittelt werden, die es ermöglicht, abhängig von einem gegebenen aktuellen internen Zustand $s_t$ einen geeigneten Wert *a* des Hyperparameters *h* vorzuschlagen.

Um eine bessere Generalisierung der Strategie zu erreichen, also eine Strategie zu finden, die auf mehreren unterschiedlichen Trainingsinstanzen und auch auf unbekannten Instanzen zu guten Ergebnissen führt, wird Gleichung (1) als "contextual Markov Decision Process" (cMDP) umgeschrieben:

$$M_i := (S, A, T_i, R_i) \qquad (2)$$

wobei *S* der Zustandsraum ist, *A* der Aktionsraum ist, *T* die Übergangsfunktion ist und *R* die Belohnungsfunktion ist. Der Index $i \in I$ gibt die betrachtete Instanz einer Mehrzahl von Instanzen *I* an.

Um eine Strategie zu ermitteln, die auf allen Instanzen *I* funktioniert, kann für die MDPs nach Gleichung (2) ein gemeinsamer Aktionsraum *A* und ein gemeinsamer Zustandsraum *S* für alle Instanzen festgelegt werden. Es werden aber unterschiedlichen Übergangs- und Belohnungsfunktionen $T_i$, $R_i$ für die unterschiedlichen Instanzen *i* verwendet. Mit dem nach Gleichung (2) definierten MDPs kann nun eine Strategie $\Pi$ ermittelt werden, die auf alle Instanzen *I* angewendet werden kann.

Beim Anlernen eines neuronalen Netzes kann eine Instanz ein komplettes Dataset sein, auf welchem das neuronale Netz trainiert und evaluiert wird. Für Klassifizierungsprobleme könnte der Zustand *s* beispielsweise eine Anzahl von Klassen, eine Anzahl von Datenpunkte pro Klasse und/oder eine Dimensionalität der Datenpunkte charakterisieren.

Eine optimale Strategie $\Pi^*_{i \sim I}$ kann durch Lösen der folgenden Gleichung erreicht werden:

$$\Pi^*_{i \sim I}(s) \in argmax_{a \in A} \; R_{i \sim I}(s, a) + Q_{\Pi^*_{i \sim I}}(s, a) \qquad (3)$$

$$Q_{\Pi_{i \sim I}}(s, a) = E_{\Pi_{i \sim I}} \left[ \sum_{k=0}^{\infty} \gamma^k \; r_{i, t+k+1} \mid s_t = s, a_t = a, i \sim I \right]$$

wobei $Q_{\Pi^*_{i \sim I}}$ die Action-Value-Funktion ist, die die erwartete zukünftige Belohnung liefert, ausgehend vom Zustand s unter Anwendung der Aktion *a*, insbesondere unter Verwendung der Strategie $\Pi^*_{i \sim I}$ auf Instanz *i*, eine Abschlagsrate $\gamma$ und dem Erwartungswertoperator *E*.

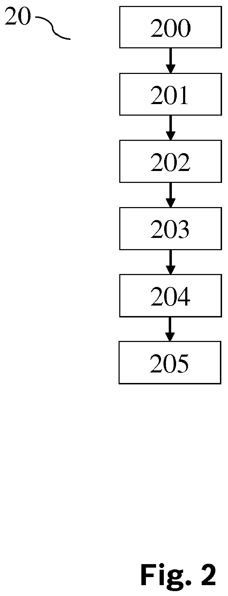

Figur 2 zeigt schematisch ein Flussdiagramm (20) eines Verfahrens zum Erstellen der Strategie $\Pi^*_{i \sim I}$, die dann zum Einstellen eines Hyperparameters *h* eines Optimierungsalgorithmus verwendet werden kann.

Das Verfahren beginnt mit Schritt 200. Hierin wird die Strategie $\Pi^*_{i \sim I}$ initialisiert. Für den Fall, dass die Strategie eine Abbildungsfunktion des aktuellen Zustandes $s_t$ auf einen Wert *a*, insbesondere eine Aktion *a,* ist, kann hierbei zum Beispiel eine zufällig initialisiert Abbildungsfunktion bereitgestellt werden. Alternativ kann die Strategie $\Pi^*_{i \sim I}$ auch durch ein neuronales Netz implementiert sein, dessen Parameter in diesem Schritt zufällig initialisiert werden. Optional kann in Schritt 200 die Mehrzahl der Instanzen *I* und auch die Übergangsfunktionen $T_i$, sowie die Belohnungsfunktionen $R_i$ bereitgestellt werden.

Optional kann der nachfolgende Schritt 201 ausgeführt werden, wenn die Übertragungsfunktionen und Belohnungsfunktionen nicht in Schritt 200 bereitgestellt wurden. Hierbei wird für jede der Instanzen *I* eine Exploration des Zustandraumes ausgeführt. Bei der Exploration wird durch eine Interaktion, zum Beispiel durch Ausführen der Aktionen *a*, beobachtet welche nachfolgende Zustände auftreten und mit welchen Belohnungen *r* die jeweiligen Aktionen *a* belohnt werden. Aus diesen Beobachtungen wird in Schritt 201 die Belohnungsfunktion und die Übergangsfunktion ermittelt, die diese nachfolgenden Zustände und Belohnungen abhängig von den beobachteten Zuständen und ausgeführten Aktionen a vorhersagen können. Es sei angemerkt, dass der Schritt 201 für jede der bereitgestellten Instanzen ausgeführt werden kann.

In Schritt 202 wird dann die Strategie $\Pi^*_{i \sim I}$ mithilfe der Gleichung (3) optimiert. Hierfür wird für jede Instanz *i* ein Rollout ausgeführt, wobei anhand der Aktionswert-Funktion *Q(s,a)* für jeden ausgeführten Iterationsschritt anhand der bereitgestellten Belohnungsfunktionen $R_i$ und Übergangsfunktionen $T_i$ für die jeweilige Instanz eine Gesamtbelohnung ermittelt wird. Die Strategie $\Pi^*_{i \sim I}$ wird dann derart optimiert, dass diese eine Aktion *a* auswählt, sodass diese zu einer möglichst hohen Gesamtbelohnung für die jeweilige Instanz *i* führt.

Wenn die Strategie $\Pi^*_{i \sim I}$ durch ein neuronales Netz implementiert ist, dann wird in Schritt 202 bspw. eine Parametrisierung dieses neuronalen Netzes angepasst.

Der Schritt 202 wird für jede der bereitgestellten Instanzen ausgeführt. Denkbar ist auch, dass der Schritt 202 mehrmals für die Instanzen ausgeführt wird.

Der Schritt 202 kann mehrfach hintereinander wiederholt werden, bis ein vorgebbares Abbruchkriterium erfüllt ist.

In dem nachfolgenden Schritt 203 wird die optimierte Strategie bereitgestellt. Die optimierte Strategie kann beispielsweise dem Regler (10) bereitgestellt werden.

In den nachfolgenden optionalen Schritten 204 und 205, wird die bereitgestellte Strategie aus Schritt 203 verwendet, um den Hyperparameter $h$ beim Ausführen des Optimierungsalgorithmus (11) anzupassen.

In dem optionalen Schritt 204 wird mittels der Strategie aus Schritt 203 abhängig von dem aktuellen Zustand des Optimierungsalgorithmus ein Wert $a$ vorgeschlagen, der dann als Wert $v$ des Hyperparameters $h$ verwendet wird. Daraufhin kann der Optimierungsalgorithmus abhängig von dem Hyperparameter das Optimierungsproblem lösen oder mindestens einen Iterationsschritt ausführen, um sich einer Lösung des Optimierungsproblems anzunähern.

In dem optionalen Schritt 205 wird der Optimierungsalgorithmus verwendet, um ein maschinelles Lernsystem derart anzulernen, dass dieses zum Klassifizieren von Bilder und/oder Audiosignalen eingerichtet ist.

Denkbar ist, dass das angelernte neuronale Netz nach Beendigung des Schrittes 205 zum Beispiel für einen zumindest teilautonomen Roboter verwendet wird. Der zumindest teilautonome Roboter kann durch ein zumindest teilautonomes Fahrzeug gegeben sein. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

Das zumindest teilautonome Fahrzeug kann eine Erfassungseinheit umfassen. Die Erfassungseinheit kann zum Beispiel eine Kamera sein, welche eine Umgebung des Fahrzeugs erfasst. Die Erfassungseinheit kann mit dem maschinellen Lernsystem verbunden sein. Das maschinelle Lernsystem ermittelt abhängig von einer bereitgestellten Eingangsgröße, z.B. bereitgestellt von der Erfassungseinheit, und in Abhängigkeit der Parametrisierung des ersten maschinellen Lernsystem eine Ausgangsgröße. Die Ausgangsgröße kann an eine Steuerungseinheit weitergeleitet werden.

Die Steuerungseinheit steuert in Abhängigkeit der Ausgangsgröße des maschinellen Lernsystem einen Aktor, vorzugsweise steuert diese den Aktor derart, dass das Fahrzeug ein kollisionsfreies Manöver ausführt. Im ersten Ausführungsbeispiel kann der Aktor ein Motor oder ein Bremssystem des Fahrzeugs sein. In einem weiteren Ausführungsbeispiel kann der teilautonome Roboter ein Werkzeug, eine Werkmaschine oder ein Fertigungsroboter sein. Ein Material eines Werkstückes kann mittels des ersten maschinellen Lernsystem klassifiziert werden. Der Aktor kann hierbei z.B. ein Motor, der einen Schleifkopf betreibt, sein.

## Patentansprüche

1. Verfahren zum Einstellen eines Hyperparameters $h$ eines Computerprogramms,

   wobei das Computerprogramm mittels eines Optimierungsalgorithmus (11) ein Optimierungsproblem löst und der Optimierungsalgorithmus (11) anhand des Hyperparameters $h$ parametrisiert ist,
   wobei abhängig von einem erfassten Zustand (engl. state) des Computerprogramms mittels einer vorgegebenen Strategie (engl. policy, $\Pi$) ein Wert (engl. action, $a$) vorgeschlagen wird,
   wobei ein Wert $v$ des Hyperparameters $h$ abhängig von dem vorgeschlagenen Wert $a$ der vorgegebenen Strategie $\Pi$ angepasst wird.

2. Verfahren nach Anspruch 1, wobei der Optimierungsalgorithmus (11) iterativ ausgeführt wird,

   wobei nach Beendigung eines Iterationsschrittes des Optimierungsalgorithmus (11) der Zustand $s$ des Computerprogrammes erfasst wird,
   wobei zumindest ein nachfolgender Iterationsschritt des Optimierungsalgorithmus (11) ausgeführt wird, nachdem der Wert des Hyperparameters angepasst wurde.

3. Verfahren nach einem der Ansprüche 1 oder 2, wobei die vorgegebene Strategie abhängig von einer Mehrzahl von unterschiedlichen Instanzen des Optimierungsproblems erstellt wurde.

4. Verfahren nach einem der vorhergehenden Ansprüche, wobei derjenige Wert aus einem vorgebbaren Wertebereich $A_h$ des Hyperparameters ermittelt wird, für welchen eine maximale Gesamtbelohnung erzielt wird und als Wert $a$ für den Hyperparameter vorgeschlagen wird,
   wobei die Gesamtbelohnung abhängig von einem Rollout beginnend bei dem erfassten Zustand $s$ und einem gegebenen Wert aus dem Wertebereich $A_h$ des Hyperparameters unter Verwendung der Strategie ermittelt wird.

**5.** Verfahren nach Anspruch 4, wobei eine Mehrzahl von Gesamtbelohnungen jeweils für unterschiedliche Instanzen des Optimierungsproblems ermittelt werden und derjenige Wert aus dem vorgebbaren Wertebereich $A_h$ des Hyperparameters $h$ auswählt wird, für welchen die maximale Gesamtbelohnung der unterschiedlichen Instanzen ermittelt wird.

**6.** Verfahren nach einem der vorhergehenden Ansprüche, wobei der Optimierungsalgorithmus (11) zum Optimieren einer Parametrisierung eines maschinellen Lernsystems verwendet wird.

**7.** Verfahren zum Erstellen einer Strategie $\Pi$, die zum Anpassen eines Hyperparameters $h$ eines Optimierungsalgorithmus (11) verwendet wird,

wobei der Optimierungsalgorithmus (11) zum Lösen eines Optimierungsproblems eingerichtet ist, umfassend folgende Schritte: Initialisieren der Strategie $\Pi$,
wobei die initialisierte Strategie geeignet ist, abhängig von einem Zustand $s$ des Optimierungsalgorithmus einen Wert $a$ für den Hyperparameter $h$ vorzuschlagen;
Erhalten einer Mehrzahl von initialen Zuständen des Optimierungsalgorithmus (11) und einer Mehrzahl von vorgegebenen Belohnungsfunktionen (engl. reward function), die beide jeweils einer Instanzen $i$ einer Mehrzahl von Instanzen $I$ des Optimierungsproblems zugeordnet sind;
Optimieren der Strategie hinsichtlich einer Gesamtbelohnung für jede der Instanzen $i$,
wobei die Gesamtbelohnungen abhängig von jeweils einem Rollout beginnend bei dem initialen Zustand und jeweils einem unterschiedlichen Wert aus einem vorgebbaren Wertebereich des Hyperparameters und abhängig von der jeweiligen Belohnungsfunktion, die der jeweiligen Instanz zugeordnet ist, ermittelt wird.

**8.** Verfahren nach Anspruch 7, wobei die Strategie mittels bestärkenden Lernens (engl. reinforcement learning) erlernt wird.

**9.** Verfahren nach einem der vorhergehenden Ansprüche 7 oder 8, wobei ein Zustandsraum und ein Wertebereich $A_h$ des Hyperparameters über die Instanzen hinweg gleich sind,

wobei unterschiedliche Belohnungsfunktion und/oder unterschiedliche Übergangsfunktion (engl. transition function $T$) jeweils den unterschiedlichen Instanzen zugeordnet sind,
wobei die Gesamtbelohnung zusätzlich abhängig von der jeweiligen Übertragungsfunktion, die der jeweiligen Instanz zugeordnet ist, ermittelt wird.

**10.** Verfahren nach einem der vorhergehenden Ansprüche 7 bis 9, wobei die Gesamtbelohnung jeweils abhängig von einem Rollout beginnend bei dem initialen Zustand der jeweiligen Instanz schrittweise abhängig von der initialisierten Strategie und der jeweiligen vorgegebenen Belohnungsfunktion und einer Übergangsfunktion ermittelt wird.

**11.** Verfahren nach einem der vorhergehenden Ansprüche 7 bis 10, umfassend folgende weitere Schritte:

Bereitstellen einer Mehrzahl der unterschiedlichen Instanzen des Optimierungsproblems, für welches der Optimierungsalgorithmus zum Lösen eingerichtet ist;
Explorieren des Zustandsraumes jeder der Instanzen,

wobei beim Explorieren erkundet wird, gegeben welchem aktuellen Zustand unter Verwendung eines möglichen Wertes des Hyperparameters aus dem vorgebbaren Wertebereich des Hyperparameters welcher nachfolgende Zustand erreicht wird,
wobei die Belohnungsfunktion abhängig von der Exploration ermittelt wird.

**12.** Computerprogramm, welches Befehle umfasst, die beim Ausführen dieser Befehle mittels eines Computers, den Computer veranlassen das Verfahren nach einem der vorhergehenden Ansprüche auszuführen.

**13.** Maschinenlesbares Speichermedium, auf welchem das Computerprogramm nach Anspruch 12 hinterlegt ist.

**14.** Vorrichtung, welche eingerichtet ist, das Verfahren nach einem der Ansprüche 1 bis 11 auszuführen.

**Fig. 1**

EP 3 748 551 A1

20

```
┌─────────┐
│   200   │
└─────────┘
     │
     ▼
┌─────────┐
│   201   │
└─────────┘
     │
     ▼
┌─────────┐
│   202   │
└─────────┘
     │
     ▼
┌─────────┐
│   203   │
└─────────┘
     │
     ▼
┌─────────┐
│   204   │
└─────────┘
     │
     ▼
┌─────────┐
│   205   │
└─────────┘
```

**Fig. 2**

**Europäisches Patentamt**
**European Patent Office**
**Office européen des brevets**

# EUROPÄISCHER RECHERCHENBERICHT

Nummer der Anmeldung

EP 19 17 9116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Arun Nair ET AL: "Massively Parallel Methods for Deep Reinforcement Learning", , 16. Juli 2015 (2015-07-16), Seiten 1-14, XP055280349, Gefunden im Internet: URL:http://arxiv.org/pdf/1507.04296v2.pdf [gefunden am 2016-06-14] * Abbildung 2 * * Abschnitt 1, letzter Absatz * * Abschnitte 3.2, 3.3, 4 * ----- | 1-14 | INV. G06N3/08 G06N5/00 G06N7/00 |
| X | DE 20 2017 105598 U1 (GOOGLE LLC N D GES D STAATES DELAWARE [US]) 24. Mai 2018 (2018-05-24) * Abbildungen 1, 3 * * Ansprüche 1, 2, 7, 8, 9, 11 * * Absatz [0059] * * Absatz [0071] * ----- | 1,12-14 | |
| X | KUSY MACIEJ ET AL: "Probabilistic Neural Network Training Procedure with the Use of SARSA Algorithm", 14. Juni 2015 (2015-06-14), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 49 - 58, XP047314660, ISBN: 978-3-642-17318-9 * Zusammenfassung * * section 1, second paragraph, lines 1-9 * * section 1, second to last paragraph * * sections 3 and 4 * ----- | 1,12-14 | RECHERCHIERTE SACHGEBIETE (IPC) G06N |

Der vorliegende Recherchenbericht wurde für alle Patentansprüche erstellt

| Recherchenort | Abschlußdatum der Recherche | Prüfer |
|---|---|---|
| Den Haag | 26. November 2019 | Theissing, Simon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

EP 3 748 551 A1

## ANHANG ZUM EUROPÄISCHEN RECHERCHENBERICHT
## ÜBER DIE EUROPÄISCHE PATENTANMELDUNG NR.

EP 19 17 9116

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2019

| Im Recherchenbericht angeführtes Patentdokument | Datum der Veröffentlichung | Mitglied(er) der Patentfamilie | Datum der Veröffentlichung |
|---|---|---|---|
| DE 202017105598 U1 | 24-05-2018 | CN 109906132 A | 18-06-2019 |
| | | DE 202017105598 U1 | 24-05-2018 |
| | | EP 3504034 A1 | 03-07-2019 |
| | | JP 2019529135 A | 17-10-2019 |
| | | KR 20190040506 A | 18-04-2019 |
| | | US 2019232488 A1 | 01-08-2019 |
| | | WO 2018053187 A1 | 22-03-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. ELSKEN ; J. METZEN ; F. HUTTER.** *Neural architecture search: A survey,* 2018